Europäisches Patentamt

European Patent Office

Office européen des brevets

(19)

(11) Publication number: **0 063 243**

**B1**

(12) **EUROPEAN PATENT SPECIFICATION**

(45) Date of publication of patent specification: **14.09.88**

(51) Int. Cl.⁴: **G 06 K 7/10,** G 06 K 9/20

(21) Application number: **82102235.7**

(22) Date of filing: **18.03.82**

(54) **OCR and bar code reader with optimized sensor.**

(30) Priority: **09.04.81 US 252555**

(43) Date of publication of application:
**27.10.82 Bulletin 82/43**

(45) Publication of the grant of the patent:
**14.09.88 Bulletin 88/37**

(84) Designated Contracting States:
**BE DE FR GB IT**

(56) References cited:
**EP-A-0 016 400
US-A-3 275 806
US-A-3 558 859
US-A-3 578 953
US-A-3 949 363**

(73) Proprietor: **RECOGNITION EQUIPMENT
INCORPORATED
Post Office Box 222307
Dallas Texas 75222 (US)**

(72) Inventor: **McWaters, Lynn D.
3905 Winsor
Garland Texas (US)**
Inventor: **Sanner, Medford D.
1009 Hadrian
Irving Texas (US)**

(74) Representative: **Wagner, Karl H.
WAGNER & GEYER Patentanwälte
Gewuerzmuehlstrasse 5 Postfach 246
D-8000 München 22 (DE)**

Courier Press, Leamington Spa, England.

## Description

### Field of invention

This invention relates to optical character readers and more particularly to a hand held optical character reader for reading either alphanumeric or bar code format with the same hand held unit with no operator intervention to switch between the reading of the two formats.

### Prior art

Hand held optical readers are well known in the art and alphanumeric readers are described in U.S. Patent 4,075,605 and 4,118,687. There are also many patents relating to hand held units for reading bar code particularly the universal product code (UPC), however there are no hand held readers which read both bar code format and alphanumeric format. With the increasing use of OCR coding in merchandising tags and inventory control it is desirable to have a hand held unit which will read either the bar code or the alphanumeric format without the operator having to switch the unit depending upon which code is to be read.

U.S. Patent No. 3,949,363 relates to a redundant character recognition system, not a hand held optical reader. That recognition system minimizes both read failures and ambiguities caused by conflicting read signals by merging character recognition signals from Magnetic Ink character Recognition, Optical Character Recognition and Bar-code Read Heads to produce a single data stream for automatic sorting of a constant velocity train of documents.

### Summary of the invention

The invention relates to a hand held optical reader for scanning and reading alphanumeric and bar code data as set forth in the first part of claim 1, and is characterized by the features of the second part of claim 1.

Cross reference is made to copending European Patent Application EP—A—0 062 777.

Preferred embodiments of the invention are disclosed in the dependent claims.

This invention relates to hand held optical readers and more particularly to hand held optical character readers which will read either bar code or alphanumeric format without the operator having to switch between the two depending upon which the unit is reading. The present invention may be scanned across either or both of the formats singularly or in combination and the reader will separate the two codes outputting only one information stream. It is desirable only to read one of the formats at a time; however it is not convenient to have to switch between the two. Therefore the present invention indiscriminately reads either and outputs the information read.

### Drawings

Figure, 1a and 1b are block diagrams of two different embodiment of a dual reading optical character recognition stystem.

Figure 2 illustrates both alphanumeric and bar code format.

Figure 3a is a block diagram of thresholding circuit.

Figure 3b is a circuit diagram of a thresholding circuit.

Figure 4 illustrates the wave forms of the Video inputs and outputs of the comparator.

Figure 5 is a microprocessor for reading the bar code format.

Figure 6 is a flowchart of the UPC barcode reading process and Tables 1, 2 and 3 illustrate the black/white decoding patterns for UPC bar code format.

### Preferred embodiment

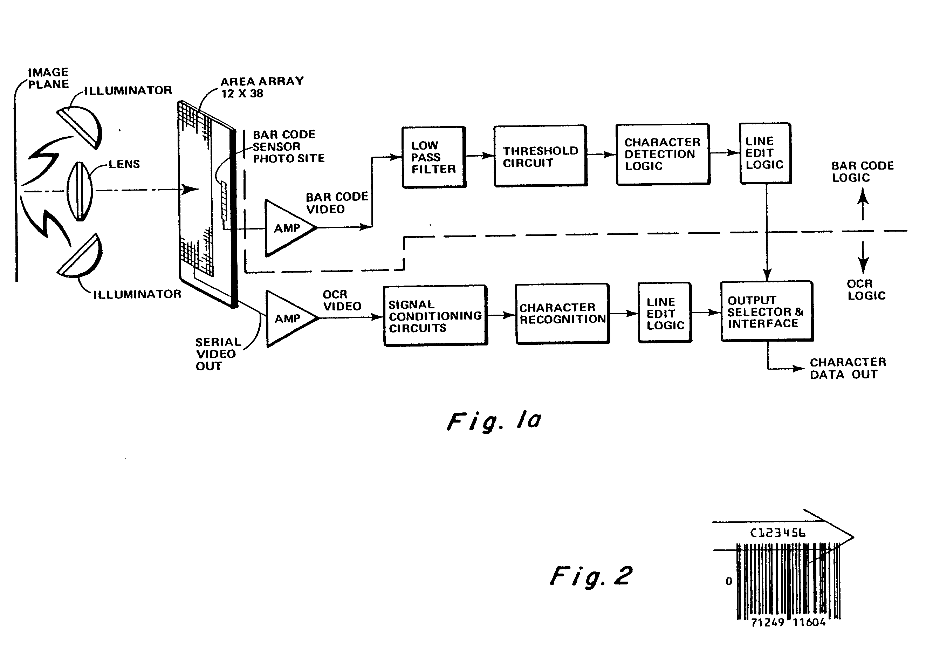

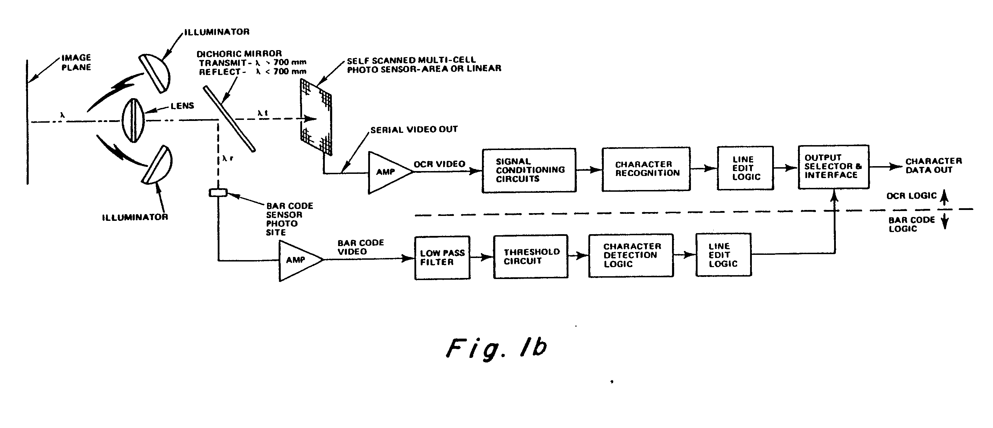

Illustrated in Figures 1a and 1b are dual reading hand held optical character recognition units. In Figure 1a a common lens system and common illumination is used for projecting data into the system. A sensing array is modified to contain a separate photodiode site. The photodiode is rectangular instead of round or square which gives spatial filtering characteristics that will enhance the sensing of bar code images. The tall thin geometry will allow narrow spaces and bars to be sensed and is tolerant of voids in bars and extraneous ink spots. An optical coating can be placed over this photodiode to obtain a different spectral response than that of the area array. Normally, the area array will respond to the near IR spectrum so that blind inks can be used in conjunction with OCR printing without causing interference. The filter for the bar code sensor will attenuate the IR energy and peak the response in the red portion of the visible spectrum to be compatible with the Univeral Product Code printing specifications. The combination sensor can be a monolithic device or a hybrid device made up of two separate semiconductor chips.

In Figure 1b the bar code photo device is physically separated and a mirror or prism is used to reflect onto the photo sensor.

Two preamp circuits amplify the outputs of the area array and the bar code sensor to boost very small currents to optimum signal levels. The OCR video signal goes to signal conditioning circuits, a character recognition circuit and a line edit logic circuit similar to those U.S. Patent 4,075,605 and 4,188,687. Since these circuit are adequately described in these patents they will not be further discussed here.

The bar code processor is described as follows:

The minimum bar width and space pair represents the highest spatial information frequency. When this pattern is scanned by a sensor a signal frequency is obtained that will be in the range of 1500 Hz for a 30 IPS scan rate. The low pass filter is designed to pass data only up to this frequency; thus improving the signal-to-noise ratio of the signal before it is thresholded. The filter utilized for the low pass function is an active filter which implements a 3-pole, low ripple Chebyshev design.

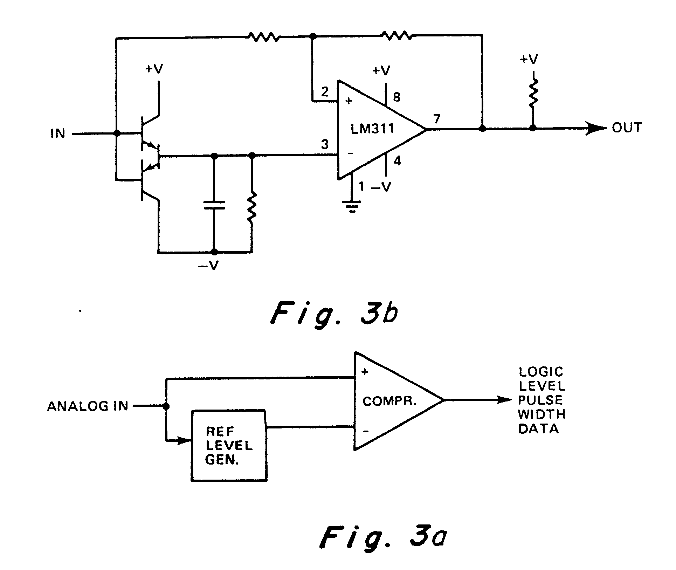

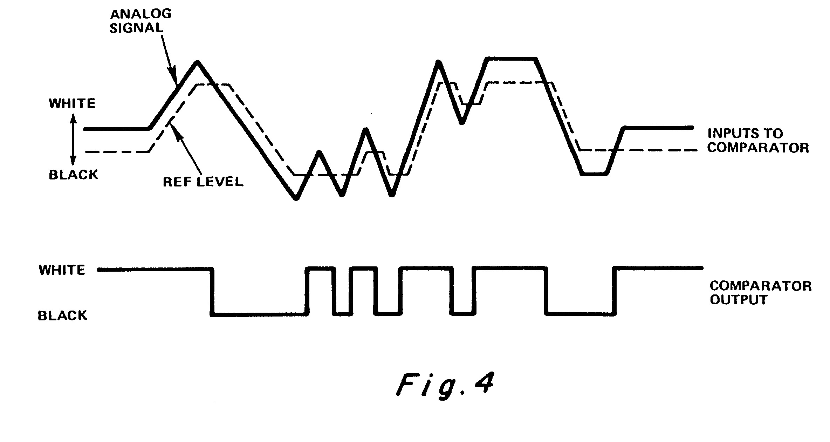

The function of the thresholding circuit is to transform the analog signal that is derived from optically scanning the bar code into a digital signal level whose pulse widths are representative of the widths of the bars in the bar code. The threshold circuit must accommodate a wide range of signal levels and modulation percentages in order to read a high percentage of tags or inventory codes. Because of this, an adaptive reference level must be used in thresholding the analog signal. Figure 3a shows a block diagram of this approach. The circuit to accomplish this function is shown in Figure 3b. The dynamic reference voltage is either 0.6 volts less than a positive peak or 0.6 volts greater than the negative peak. The peak values of the analog signal establish new reference levels for each signal swing and a black-to-white or white-to-black output transition occurs when the analog signal decreases from its peak value by 0.6 volts. Pulse widths will be accurate for waveforms that have equal positive and negative slopes and have peak to peak swings of 1.2 volts or greater. The waveforms shown in Figure 4 represent a very poor analog input, but show the reference that would be produced and the resulting digital output. The output pulse widths are equal to the time between analog peaks, or in the case of a flat top signal, the time between positive to negative (or vice versa) directional changes. The comparator (Figure 3a) is biased by the quiescent reference to produce a white output so that as the reader is brought closer to the paper no change in output occurs.

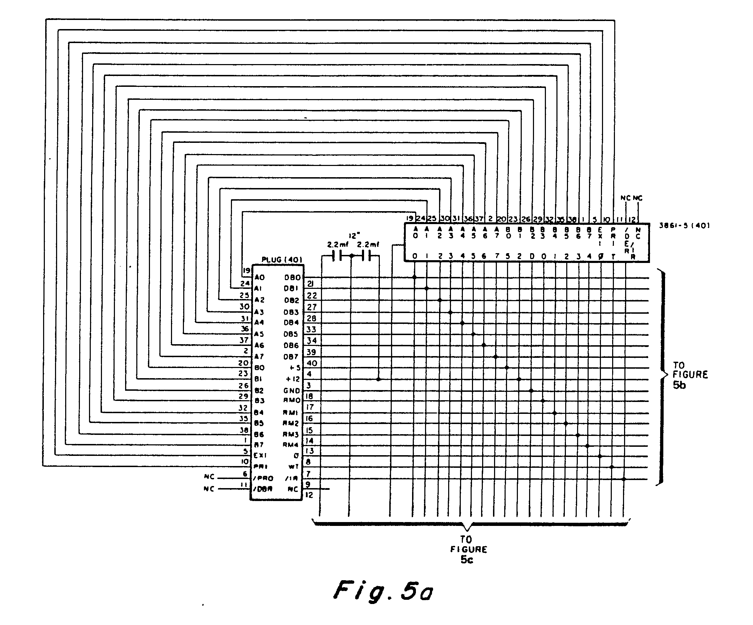

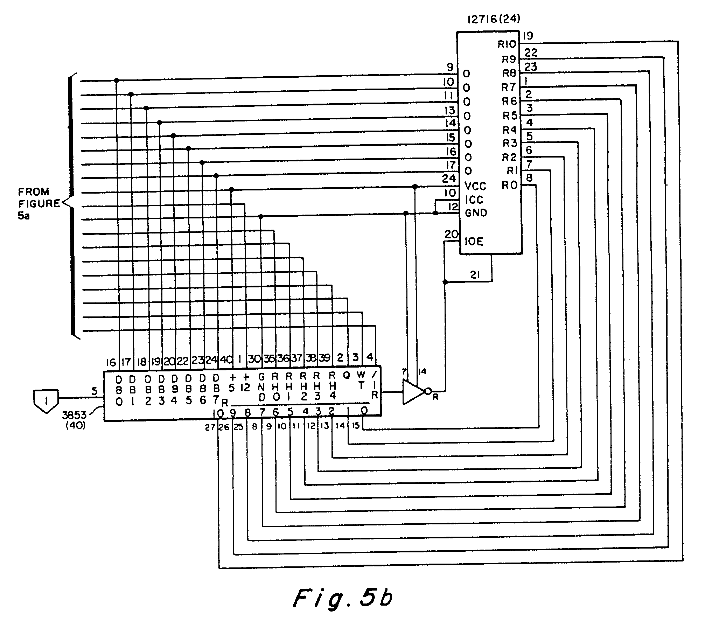

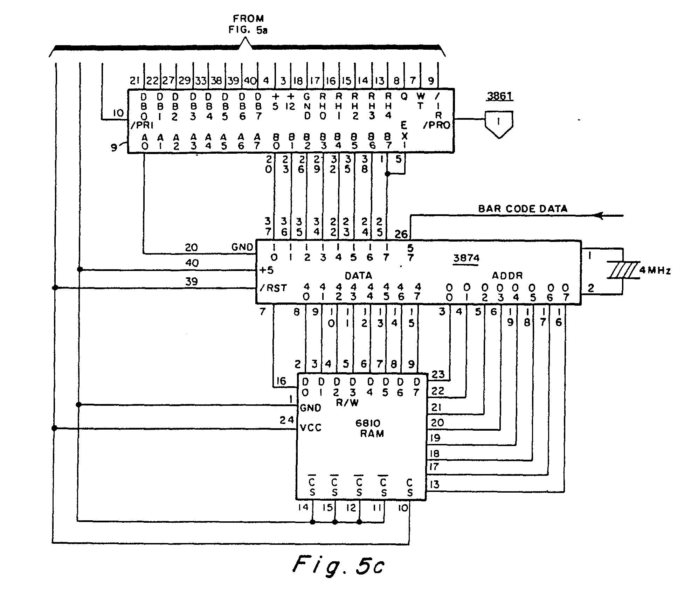

The character detection logic is implemented in the form of a 3874 8-bit microprocessor and is illustrated in Figure 5. The microprocessor looks for black/white transitions on its input port 5-bit 7. The time intervals between black white transitions are then recorded in the microprocessor's memory. When the time between the black white transitions is long (i.e. widest bar width divided by minimum reading speed), the microprocessor then "times out" and goes to process the black white transitions for a valid bar code value.

In the case of the UPC code, each set of two black bars and two white bars represents digital character. The relative widths of the black and white determine which digital characters. The charts 1, 2 and 3 illustrate the decoding for UPC characters.

The velocity variations of a hand held device can be compensated for with this bar code due to the fact that each set of two black bars and two white bars compose 7 modules.

For:

$T_w$=Time for white
$T_b$=Time for black
$T_m$=Time for 1/7 module

Then:

$W_{w1}=T_{w1}/T_m$
$W_{b1}=T_{b1}/T_m$
$W_{w2}=T_{w2}/T_m$
$W_{b2}=T_{b2}/T_m$

And:

$$W_{w1}+W_{w2}+W_{b1}+W_{b2}=7$$
$$W_{min}=1$$
$$W_{max}=4$$

These characteristics can then be used to decode the black white transitions into decimal characters.

The UPC bar code is further protected with stop/start bars, center bars, right and left of center bars and overall parity check characters.

These are generally illustrated in Table 1. Other black/white bar codes have similar properties and can be decoded by recording the time length of the black/white bars and using appropriate decoding equations.

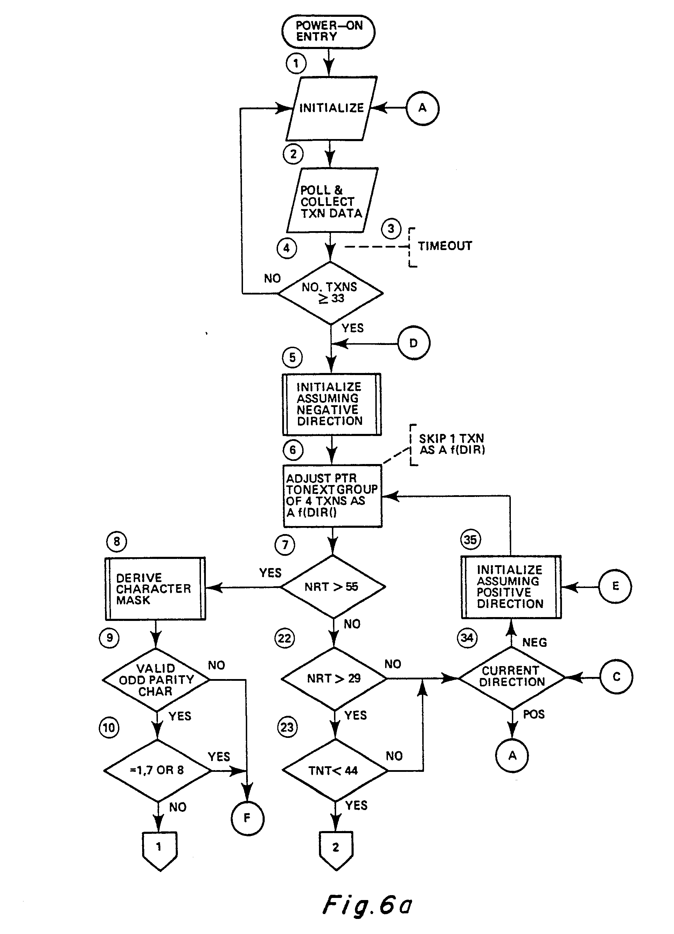

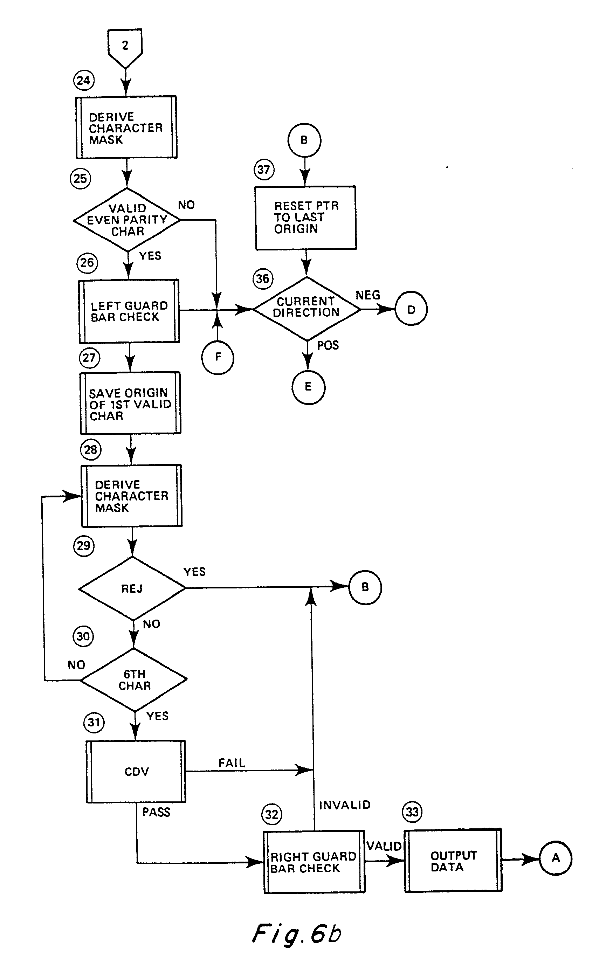

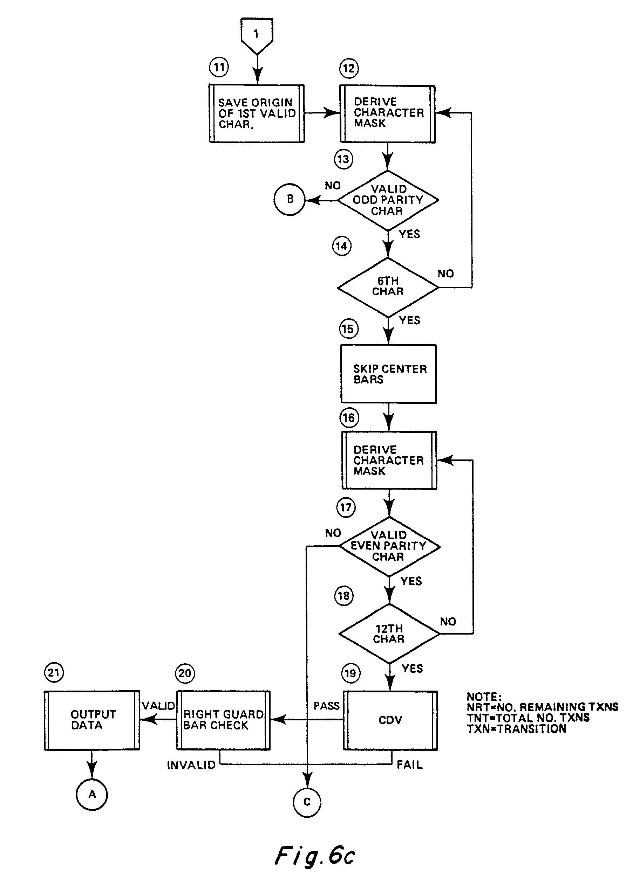

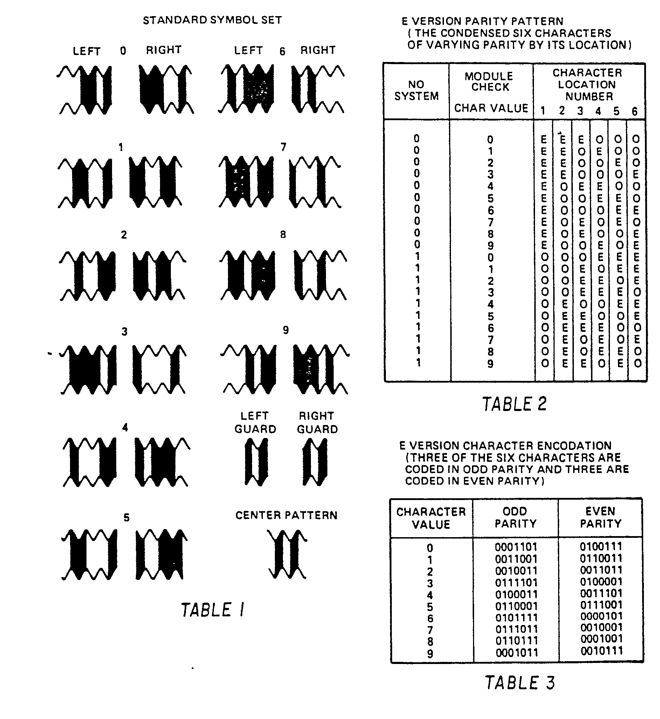

A flow chart of the UPC barcode reading process in shown in Figure 6.

Step 1. The circuits and registers are initialized by power on clear circuits at initial power turn on. The time for the black and white bars and spaces is recorded in memory during Step 2. If a period of time has passed which is greater than the widest bar or space divided by the lowest expected reader velocity, and no black to white or white to black data transition has occurred, then a time out condition is generated at Step 3. If fewer then 33 transitions of black to white and white to black have occurred at Step 4, then it is impossible for a full UPC barcode to have been read. The process is reinitialized to Step 1.

With 33 or more transitions of black to white and white to black it is possible that a valid UPC barcode has been scanned and the process advances to Step 5 where an initial guess of a right to left scan of the reader over the barcode is assumed.

At Step 6 the collected data from Step 2 is looked at as groups of 2 bars and two spaces since all valid numbers are so grouped as shown in Table 1. If the number of transitions is greater than 55 then the process assumes a twelve digit long code version the UPC barcode at Step 7 and proceeds to Step 8 where the mask for the four bars is derived by using the equations:

$$W_{w1}+W_{w2}+W_{B1}+W_{b2}=7$$
and
$$W_{min}=1$$
$$W_{max}=4$$

The sum of the widths of the two black ($W_{bx}$) bars and two white spaces ($W_{wx}$) is 7 units and the minimum width is one and the maximum width is four.

In Step 9 the character mask or pattern is checked against the odd parity characters of Table 3. If a valid character is found then the decision goes to Step 10 where the first valid odd parity character is compared to the numbers one (1), seven (7) and eight (8). These numbers are excluded since in the 12 digit UPC, the first left hand digit cannot be one, seven or eight. The negative leg of Step 9 and the positive leg of Step 10 will be discussed later as they indicate a good start character for the 12 digit UPC code has not been derived yet.

Step 11 indicates that the first valid left hand odd parity character of the 12 digit UPC code has been found and its place in the input data stream is marked and the next two sets of black and white bars are indexed for the character mask derivation in Step 12. This is the same process as described in Step 8. If this character mask corresponds to a valid odd parity character in Step 13, then this character is stored away and the input stream reindexed to next two sets of black and white bars. If less than six characters have been found, then Steps 12 and 13 are repeated by the decision at Step 14.

After 6 characters have been found by repeating Steps 12 and 13, the bar code format expects a center bar pattern as shown in Table 1. Step 15 skips over this center bar pattern. Step 16 looks at two more sets of bars and spaces as was done in Step 8. Since the right hand side of the 12 digit UPC code is even parity, Step 17 looks for valid even parity digits from the complement of the odd parity of Table 3. This process continues until six even parity digits are found, thus making a total of 12 character as indicated in Step 18. When the 12th character is found, a check digit is calculated over the 12 characters in Step 19, and if the check digit calculates properly the right guard bars are validated in Step 20 against the pattern shown in Table 1.

When all of these checks, as outlined above, are passed, the digits for the validated bar code data are output in Step 21 to the output selector and interfaced as shown in Figure 1a. The steps as outlined above for Steps 8 through 21 was for a 12 digit UPC barcode reading the data out from left to right as it appears on the page. The actual scanned direction was compensated for in Steps 5 or 35.

Now returning to Step 7 and taking the "no leg", this part of the flow chart is basically for the E version (6 digit) UPC code. At Step 22 if the number of transitions (bars and spaces) is less than 29, then this is insufficient for a valid 6 digit barcode and the process goes to Step 34 to try the opposite direction, if it has not already been tried. At Step 23 the number of transitions is checked to be less than 44. If this test is passed then Step 24 uses a set of two bars and two spaces to derive a character mask as was done in Step 8. Since at the present time only number system zero from Table 2 is used, then this first character must be even parity. This check is done in Step 25.

If a valid first left character for the 6 digit UPC barcode is found, the input pointer is backed up three transitions and the left guard bar is checked for the pattern shown in Table 1. This is Step 26 of the process. If the left guard bar is validated then the location of the first valid character is recorded in Step 27. The pointer is moved to the next set of two black and two white bars and the character mask is derived in Step 28 as it was in Step 8.

In Step 29 the character mask is compared to Table 3 for a match of the odd or even parity digits. If a match is found, not a reject, the character and parity is stored and the process of Step 28 and 29 is repeated until six characters are found in Step 30. When the six characters have been found Step 31 compares the check digit with the character parity shown in Table 2. If this check digit calculation passes, then in Step 32 the right guard bars, as shown in Table 1, are validated. If this validation passes then the data is output in Step 33 as it was in Step 21. This thus completes the successful decode of a six character UPC barcode.

Returning to Step 34 which is entered from Steps 20, 22 or 23. These indicate a failure of the decode process in the initial assumed negative direction. Thus in Step 34 if the present direction is negative, then the positive direction is assumed in Step 35 and the process restarts at Step 6 for another look in the opposite direction. If, in Step 34, the previous direction was positive, that implies Step 35 has already tried before so the process aborts having not found a valid barcode in either direction.

Step 36 is a result of a failure in Steps 9, 10, 25, 26 or 37. In this case if the direction was positive or negative the pointer is moved one bar or space in the previously defined direction and the process tried over again at Step 6.

Step 37 is a result of a failure in Steps 13, 29, 31 or 32. In this case the pointer to the input data stream must be replaced to its previous origin before the one bar or space adjustment is made in the proper direction.

The line edit logic is performed by a 3874 Microprocessor. The digits as determined in the character detection logic are checked as to direction of scan, digit parity, and line parity. In the case of the UPC bar code, the number of black elements (not bars) per digit determine the character parity (000 is left hand bars; even is right hand bars). The line parity is determined by a weighting scheme of the first eleven characters to determine the twelfth character.

These checks, coupled with hand, center, and left hand guard bars are used to provide bar code line data integrity.

When the bar code field has passed all of the above tests for data integrity, the data is transferred to the output selector and the interface.

Processor 1 may be similar to that described in U.S. Patent 4,075,605 and 4,118,687 and is not further described here. The output selecting an interface which is fed by both the alphanumeric and the bar code processors gives priority to an output from processor 1 if there is no output in processor 1 and there is output in processor 2 then the character data output data is from processor 2. In practice there would only be an output from both processors is the units scanned as illustrated Figure 2 covering the alphanumeric characters and the bar code otherwise, there would only be an output from one of the processors and the decision does not have to be made.

## Claims

1. A hand held optical reader for scanning and reading alphanumeric and bar code data and distinguishing between said data, including an optical area array of photosensors having a plurality of columns of photosensors for scanning one face of a document and for producing electrical signals representative of data scanned from the document; a single photosensor for scanning one face of the document and for producing electrical signals representative of data scanned from the document; a first processor connected to said area array of photosensors for receiving said electrical signals from said area array of photosensors and producing an output representative of any alphanumeric data scanned; and a second processor connected to said single photosensor for receiving said electrical signals from said single photosensor and producing an output representative of any bar code data scanned; characterized by:

said optical area array of photosensors and said single photosensor being disposed on a single substrate, such that said single photosensor is disposed adjacent to and spaced apart from said optical area array of photosensors at a site outside said optical area array, said optical area array of photosensors and said single photosensor utilizing a common lens and illumination system; and

an output selector means connected to said first processor and to said second processor for outputting data from either the output of said first processor or the output of said second processor, but not both.

2. The hand held optical reader of Claim 1 wherein said single photosensor includes an optical filter coating for providing said single photosensor an optical response different from the optical response of said optical area array of photosensors.

3. The hand held optical reader of Claim 2 wherein said optical area array of photosensors responds to the near infrared spectrum and said single photosensor responds to the red portion of the visible spectrum.

4. The hand held optical reader of Claim 1 wherein said single photosensor is rectangular shaped.

## Patentansprüche

1. Eine in der Hand zu haltende optische Lesevorrichtung zum Abtasten und Lesen alphanumerischer und Strichcodedaten und zum Unterscheiden zwischen diesen Daten, wobei folgendes vorgesehen ist: eine optische Flächenanordnung aus Photosensoren mit einer Vielzahl von Spalten von Photosensoren zum Abtasten einer Stirnseite eines Dokuments und zur Erzeugung elektrischer Signale repräsentativ für die vom Dokument abgetasteten Daten; ein einziger Photosensor zum Abtasten einer Stirnfläche des Dokuments und zur Erzeugung von elektrischen Signalen repräsentativ für die vom Dokument abgetasteten Daten; ein erster Prozessor verbunden mit der Flächenanordnung von Photosensoren zum Empfang der elektrischen Signale von der Flächenanordnung von Photosensoren und zur Erzeugung einer Ansgangsgröße repräsentativ für jedwede alphanumerische abgetastete Daten; und ein zweiter Prozessor verbunden mit dem erwähnten einzelnen Photosensor zum Empfang der elektrischen Signale von dem einzelnen Photosensor und zur Erzeugung einer Ausgangsgröße repräsentativ für jedwede abgetastete Strichcodedaten, gekennzeichnet durch: die optische Flächenanordnung von Photosensoren und der erwähnte einzige Photosensor sind auf einem einzigen Substrat derart angeordnet, daß der einzige Photosensor benachbart zu und mit Abstand von der optischen Flächenanordnung von Photosensoren an einer Stelle außerhalb der optischen Flächenanordnung angeordnet ist, wobei die optische Flächenanordnung von Photosensoren und der erwähnte einzige Photosensor ein gemeinsames Linsen- und Beleuchtungssystem verwenden; und Ausgangswählmittel verbunden mit dem erwähnten ersten Prozessor und dem erwähnten zweiten Prozessor, um Daten von entweder dem Ausgang des ersten Prozessors oder dem Ausgang des zweiten Prozessors aber nicht von beiden auszugeben.

2. Eine in der Hand zu haltende optische Lesevorrichtung nach Anspruch 1, wobei der erwähnte einzige Photosensor einen optischen Filterüberzug aufweist, um dem erwähnten einzigen Photosensor ein optisches Ansprechen unterschiedlich vom optischen Ansprechen der optischen Flächenanordnung der Photosensoren zu erteilen.

3. Eine in der Hand zu haltende optische Lesevorrichtung nach Anspruch 2, wobei die optische Flächenanordnung von Photosensoren auf das nahe infrarote Spektrum anspricht, und der einzige Photosensor auf den roten Teil des sichtbaren Spektrums anspricht.

4. Eine in der Hand zu haltende optische Lesevorrichtung nach Anspruch 1, wobei der einzige Photosensor rechteckig geformt ist.

## Revendications

1. Lecteur optique tenu à la main destiné à explorer et à lire des données alphanumériques et à code à batonnets et distinguant entre lesdites données, comprenant un réseau de surface optique de photocapteurs ayant plusieurs colonnes de photocapteurs pour explorer une face d'un document et pour produire des signaux électriques représentant des données explorées sur la document; un seul photocapteur pour explorer une face du document et pour produire des signaux électriques représentant des données explorées sur le document; un premier processeur connecté audit réseau de surface des photocapteurs pour recevoir lesdits signaux électriques dudit réseau de photocapteurs et pour produire une sortie représentant des données alphanumériques explorées; et un second processeur connecté audit seul photocapteur pour recevoir lesdits signaux électriques provenant dudit seul photocapteur et pour produire une sortie représentant des données de code à bâtonnets explorées; caractérisé par:

ledit réseau de surface optique de photocapteurs et ledit seul photocapteur étant disposés sur un même substrat de manière que ledit seul photocapteur soit disposé à côté et espacé dudit réseau de surface optique de photocapteurs en un mpont extérieur audit réseau de surface optique, ledit réseau de surface optique de photocapteur et ledit seul photocapteur utilisant une lentille commune et un système d'illumination commun; et

un sélecteur de sortie connecté audit premier processeur et audit second processeur pour émettre des données provenant de la sortie dudit premier processeur ou de la sortie dudit second processeur mais non des deux.

2. Lecteur optique tenu à la main selon la revendication 1, dans lequel ledit seul photocapteur comporte un revêtement de filtre optique pour conférer audit seul photocapteur une réponse optique différente de la réponse optique dudit réseau de surface optique desdits photocapteurs.

3. Lecteur optique tenu à la main selon la revendication 2, dans lequel ledit réseau de surface optique de photocapteurs réagit au spectre infrarouge proche et ledit seul photocapteur réagit à la partie rouge du spectre visible.

4. Lecteur optique tenu à la main selon la revendication 1, dans lequel ledit seul photocapteur a une forme rectangulaire.

Fig. 1a

Fig. 2

Fig. 1b

Fig. 3b

Fig. 3a

ANALOG SIGNAL

WHITE

BLACK

REF LEVEL

INPUTS TO COMPARATOR

WHITE

BLACK

COMPARATOR OUTPUT

*Fig.4*

0 063 243

Fig. 5a

Fig. 5b

Fig. 5c

Fig.6a

# 0 063 243

*Fig.6b*

Fig.6c

NOTE:
NRT=NO. REMAINING TXNS
TNT=TOTAL NO. TXNS
TXN=TRANSITION

STANDARD SYMBOL SET

TABLE I

E VERSION PARITY PATTERN
( THE CONDENSED SIX CHARACTERS
OF VARYING PARITY BY ITS LOCATION )

| NO SYSTEM | MODULE CHECK CHAR VALUE | CHARACTER LOCATION NUMBER | | | | | |
|---|---|---|---|---|---|---|---|
| | | 1 | 2 | 3 | 4 | 5 | 6 |
| 0 | 0 | E | E | E | O | O | O |
| 0 | 1 | E | E | O | E | O | O |
| 0 | 2 | E | E | O | O | E | O |
| 0 | 3 | E | E | O | O | O | E |
| 0 | 4 | E | O | E | E | O | O |
| 0 | 5 | E | O | O | E | E | O |
| 0 | 6 | E | O | O | O | E | E |
| 0 | 7 | E | O | E | O | E | O |
| 0 | 8 | E | O | E | O | O | E |
| 0 | 9 | E | O | O | E | O | E |
| 1 | 0 | O | O | O | E | E | E |
| 1 | 1 | O | O | E | O | E | E |
| 1 | 2 | O | O | E | E | O | E |
| 1 | 3 | O | O | E | E | E | O |
| 1 | 4 | O | E | O | E | E | O |
| 1 | 5 | O | E | E | O | E | O |
| 1 | 6 | O | E | E | E | O | O |
| 1 | 7 | O | E | O | E | O | E |
| 1 | 8 | O | E | O | O | E | E |
| 1 | 9 | O | E | E | O | E | O |

TABLE 2

E VERSION CHARACTER ENCODATION
(THREE OF THE SIX CHARACTERS ARE
CODED IN ODD PARITY AND THREE ARE
CODED IN EVEN PARITY)

| CHARACTER VALUE | ODD PARITY | EVEN PARITY |
|---|---|---|
| 0 | 0001101 | 0100111 |
| 1 | 0011001 | 0110011 |
| 2 | 0010011 | 0011011 |
| 3 | 0111101 | 0100001 |
| 4 | 0100011 | 0011101 |
| 5 | 0110001 | 0111001 |
| 6 | 0101111 | 0000101 |
| 7 | 0111011 | 0010001 |
| 8 | 0110111 | 0001001 |
| 9 | 0001011 | 0010111 |

TABLE 3

11